# EUROPEAN PATENT APPLICATION

(11) **EP 1 587 241 A2**
(43) Date of publication of application: **19.10.2005**
(21) Application number: 05007874.0
(22) Date of filing: 11.04.2005
(51) Int. Cl.: H04L 12/12

(54) **Method, protocol, and system for bidirectional communication in a communication system**

(30) Priority: 15.04.2004 US 562914 P
(71) Applicant: VEGA Grieshaber KG, 77709 Wolfach (DE)
(72) Inventor: Isenmann, Andreas, 77716 Haslach i.K. (DE); Deck, Thomas, 77709 Wolfach (DE); Fehrenbach, Josef, 77716 Haslach i.K. (DE)
(74) Representative: Maiwald Patentanwalts GmbH

(57) **Abstract**

The invention relates to a method for data communication in a communication system, comprising a plurality of communication participants, each participant having a subsystem responsible for communication, whereby a communication participant acts as master (1) of the communication system, the subsystem of the master being operated continuously, whereby the other communication participants act as communication slaves (5) in the communication system, the subsystems of the communication slaves (5) being de-energized, when no communication takes place. Further, a protocol for controlling a bidirectional communication is provided, whereby establishment of the communication results from a special initial packet, which is transmitted by a communication slave (5) to a communication master (1); the initial packet is acknowledged by the master (1) with a confirmation packet; and this confirmation packet comprises information, whether subsequent communication is required. Moreover, a communication system is provided, comprising a plurality of communication participants (1, 5), each having a respective subsystem responsible for the communication, whereby at least one communication participant is adapted to act as master (1) in the communication system, having a continuously operating subsystem, whereby the other communication participants are adapted to act as communication slaves (5) in the communication system, having subsystems, which are de-energized, when no communication takes place, whereby the communication participants are sensors (4).

## Description

### TECHNICAL FIELD OF THE INVENTION

The present invention relates to a method for bidirectional communication in a communication system, a protocol for controlling the bidirectional communication, and a communication system.

### BACKGROUND OF THE INVENTION

Communication systems for carrying out data communication can either be adapted to provide for unidirectional or bidirectional communication. To enable for bidirectional communication, all components participating in the communication always have to be ready for receiving a communication packet. This permanent state of being ready to receive data, however, consumes a lot of energy.

Therefore, according to prior art, it is only provided for unidirectional communication in most communication systems. In case there is not sufficient energy available to operate all subsystems of the communication system, usually these subsystems are de-energized for the times, in which they are not needed. Often, in particular these subsystems, which are responsible for data communication, are affected by this energy saving measure.

Thus, for example the communication components of a sensor are only activated in case the sensor has to communicate a new measurement reading. This is disadvantageous, because it leads to a unidirectional communication, according to which only the sensor can carry out communication with external components. During the time, in which the sensor does not communicate, the subsystem responsible for communication is deactivated. Therefore, the sensor neither is able to receive any communication packets during this period. This leads to constrictions in the communication potential of the system.

It would be desirable to provide bidirectional communication such that the components of the system are always able to receive and transmit data, although the components of the system are not all the time energized due to energy saving reasons.

### SUMMARY OF THE INVENTION

Implementations of the invention can include one or more of the following features.

According to an aspect of the invention, a method for data communication in a communication system is provided, comprising a plurality of communication participants, each participant having a subsystem responsible for communication, whereby a communication participant acts as communication master of the communication system, the subsystem of the communication master being operated continuously, whereby the other communication participants act as communication slaves in the communication system, the subsystems of the communication slaves being de-energized, when no communication takes place.

The inventive method can either be carried out for simple communication between two participating components as well as for more complex communications involving more than two participating components. Any of the participating components can act as communication master of the system. Further, the communication participants are connected to an external control unit, communicating with the communication master of the communication system.

According to an aspect of the invention, data communication is carried out based on packets.

Another aspect of the present invention is that the communication master has a queue for each slave for collecting communication packets, which are communicated to the communication slave during the next communication establishment. These communication packets can be either received from another communication participant or from the external control unit.

According to a further aspect of the invention, the communication participants are sensors. It is possible to employ any kind of sensor as sensors used for level detection, for switching or for pressure detection.

The communication is always initiated towards the communication master of the communication system by a communication slave of the communication system. Moreover, it is provided for the communication between communication master and communication slave of the communication system taking place bi-directionally.

According to one more aspect of the invention, the communication takes place wireless by means of radio transmission. However, it can also be carried out via a bus system.

The communication slave of the communication system initiating the communication keeps the communication open for a fixedly defaulted timeslot. The communication between communication master and communication slave of the communication system is controlled by a special communication protocol.

According to a further aspect, the communication between communication master and communication slave of the communication system is carried out by means of a communication protocol, comprising a special command to terminate the communication. The communication between communication master and communication slave is terminated, if the energy available in the communication slave is not sufficient for maintaining the communication.

According to an aspect of the present invention, a method for data communication in a communication system is provided, comprising a plurality of communication participants, each participant having a subsystem responsible for communication, whereby a communication participant acts as communication master of the communication system, the subsystem of the communication master being operated continuously, whereby the other communication participants act as communication slaves in the communication system, the subsystems of the communication slaves being de-energized, when no communication takes place, whereby the communication between communication master and communication slave of the communication system takes place bi-directionally, whereby the communication is always initiated towards the communication master by the communication slave of the communication system, and whereby the communication participants are sensors.

One more aspect of the invention provides a protocol for controlling a bidirectional communication, whereby:
- establishment of the communication results from a special initial packet, which is transmitted by a communication slave to a communication master
- the initial packet is acknowledged by the communication master with a confirmation packet
- this confirmation packet comprises information, whether subsequent communication is required.

According to a further aspect, each communication packet being sent to a communication slave by the communication master comprises information concerning the remaining energy of the communication slave. Each communication packet being sent to a communication slave by the communication master, comprises information concerning the number of communication packets for the communication slave, which are present in the communication master.

Moreover, according to an aspect of the present invention, a protocol for controlling data communication between a plurality of communication participants is provided, whereby at least one participant acts as communication master of the system, having a subsystem responsible for communication, which is operated continuously, and the other participants act as communication slaves of the system, having subsystems responsible for communication, which are de-energized, when no data communication takes place, according to which:
- a communication participant acting as communication slave activates its subsystem responsible for communication
- this communication participant communicates towards the communication master and keeps its subsystem responsible for communication active for the duration of the initial communication
- the communication master confirms the receipt and responds by means of a response packet, containing information whether bidirectional connection is required for data communication, being possible at this point of time, whereby the communication master transmits communication packets to the client and vice versa.

Moreover, the bidirectional communication is terminated, when the communication master no longer transmits communication packets to the communication slave. The bidirectional communication is terminated according to another aspect of the invention, when the energy available from client which is required for maintaining data communication, is not sufficient. For saving energy, the slave deactivates its communication system, after communication is terminated.

According to an aspect of the present invention, a communication system comprising a plurality of communication participants, each having a respective subsystem responsible for the communication, whereby at least one communication participant is adapted to act as communication master in the communication system, having a continuously operating subsystem, whereby the other communication participants are adapted to act as communication slaves in the communication system, having subsystems which are de-energized, when no communication takes place.

The communication system further comprises a control unit, which is adapted to communicate with the communication master of the communication participants. Moreover, the communication system is adapted for bidirectional communication between the communication participants. According to a further aspect, the communication participants of the communication system are connected to each other via a bus system. However, the communication participants can also be equipped for wireless data transmission, for example by means of respective infrared interfaces.

### BRIEF DESCRIPTION OF THE DRAWINGS

- Fig. 1: is a schematic diagram of an arrangement of a communication system implementing the inventive method.
- Fig. 2: is a flowchart of a communication.

### DETAILED DESCRIPTION OF EXEMPLARY EMBODYMENTS OF THE PRESENT INVENTION

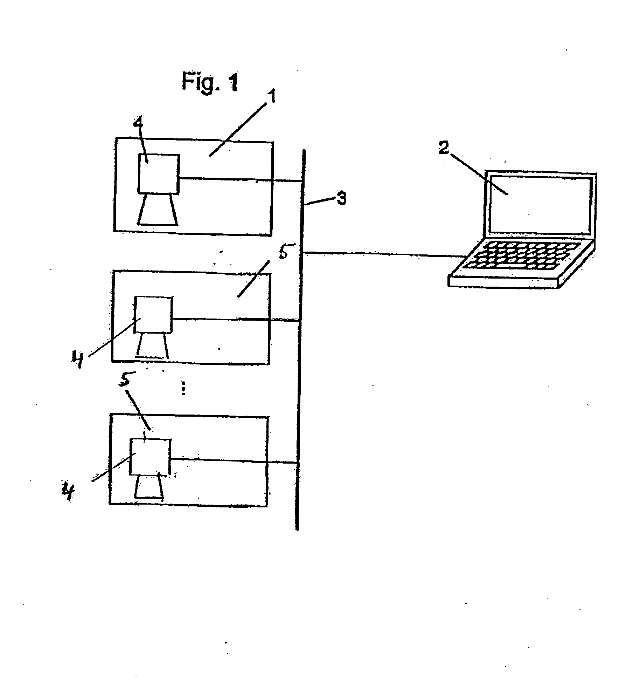

According to Fig. 1, a plurality of components is shown, which participate in the communication. These components are sensors 4, which are connected via a bus system 3 to each other. The bus system 3 is also connected to an external control unit 2, which is a PC here. The control unit 2 can also participate in data communication, as it transmits data to the sensor, e.g. data for configuration or setting of the sensor, and also receives data from the sensors, as for example the measured values.

At least one of the plurality of components 4 adopts the role of the communication server or master 1 of the communication system, respectively. This communication server or master 1 comprises a communication subsystem, i.e. a subsystem responsible for the communication, which has to be operated continuously without any interruptions or breaks for energy saving reasons or other reasons.

All other components participating in the communication act as slaves 5 or clients with respect to the master 1 in the communication system. They do not have to operate their communication subsystems continuously. To start a communication, always one of the communication clients or slaves 5 activates its subsystem. It communicates towards the communication server or master 1 of the system and maintains the communication for a predetermined timeslot. During this period, the communication server or master 1 is able to communicate also towards the communication client or slave 5.

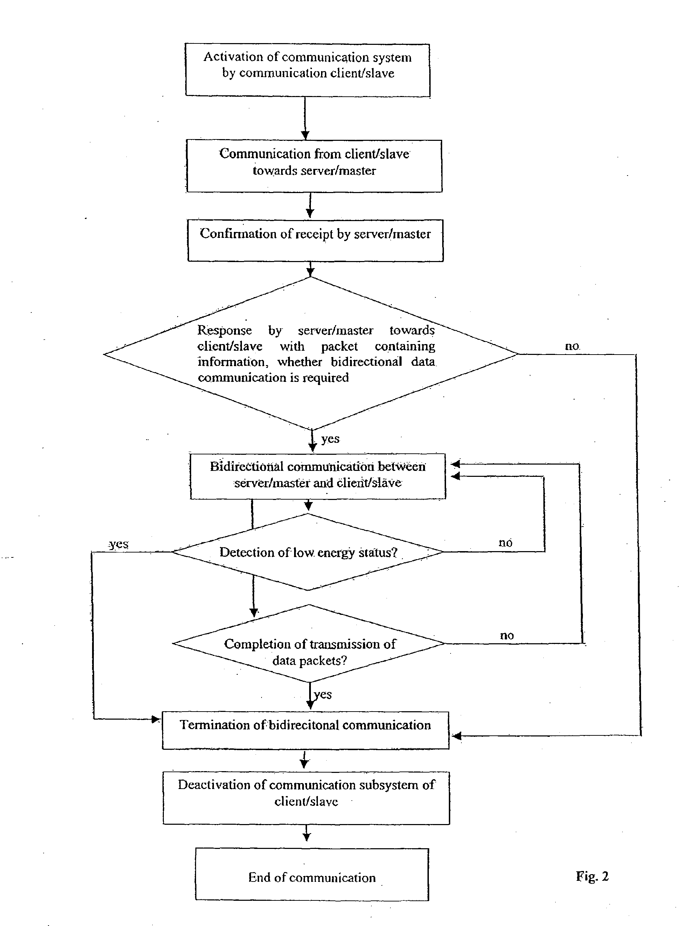

As can be seen from the flowchart shown in Fig. 2, the first step of the communication is that a communication client or slave 5 activates its subsystem responsible for communication. Next, this communication client or slave 5 communicates towards the communication server or master 1 of the communication system and keeps its subsystem active during this initial communication. The communication server or master 1 confirms receipt and responds with a response packet, containing information, whether bidirectional connection is required for data communication.

If bidirectional connection is required, bidirectional communication is possible at this point of time. The communication server or master 1 transmits communication packets to the communication client or slave 5 and vice versa.

The bidirectional communication is terminated, if no longer communication packets have to be sent by the communication server or master 1 to the communication client or slave 5, or in case there is not sufficient energy left for maintaining the communication. In the next step, the communication client or slave 5 deactivates its communication system. Communication is terminated.

Other embodiments are in the scope of the following claims.

## Claims

1. A method for data communication in a communication system, comprising a plurality of communication participants, each participant having a subsystem responsible for communication,
whereby a communication participant acts as communication master (1) of the communication system, the subsystem of the communication master (1) being operated continuously,
whereby the other communication participants act as communication slaves (5) in the communication system, the subsystems of the communication slaves (5) being de-energized, when no communication takes place.

2. The method according to claim 1, whereby the communication participants are connected to an external control unit (2), communicating with the communication master (1) of the communication system.

3. The method according to claim 1 or 2, whereby the communication participants are sensors (4).

4. The method according to any of claims 1 to 3, whereby the communication always is initiated towards the communication master (1) of the communication system by a communication slave (5) of the communication system.

5. The method according to any of claims 1 to 4, whereby the communication between communication master (1) and communication slave (5) of the communication system takes place bi-directionally.

6. The method according to any of claims 1 to 5, whereby the communication takes place wireless by means of radio transmission.

7. The method according to any of claims 1 to 6, whereby the communication is carried out via a bus system (3).

8. The method according to any of claims 1 to 7, whereby the communication takes place between two communication participants.

9. The method according to any of claims 1 to 8, whereby the communication slave (5) of the communication system initiating the communication keeps the communication open for a fixedly defaulted timeslot.

10. The method according to any of claims 1 to 9, whereby the communication between communication master (1) and communication slave (5) of the communication system is controlled by a special communication protocol.

11. The method according to any of claims 1 to 10, whereby the communication between communication master (1) and communication slave (5) of the communication system is carried out by means of a communication protocol, comprising a special command to terminate the communication.

12. The method according to any of claims 1 to 11, whereby the communication between communication master (1) and slave (5) is terminated, if the energy available in the communication slave (5) is not sufficient for maintaining the communication.

13. The method according to any of claims 1 to 12, whereby data communication is carried out based on packets.

14. The method according to any of claims 1 to 13, whereby the communication master (1) has a queue for each communication slave (5) for collecting the communication packets, which are communicated to the communication slave (5) during the next communication establishment.

15. The method according to any of claims 1 to 14, whereby the communication between communication master (1) and communication slave (5) of the communication system takes place bi-directionally, whereby the communication is always initiated towards the communication master (1) by the communication slave (5) of the communication system, and whereby the communication participants are sensors (4).

16. A protocol for controlling a bidirectional communication, whereby:
- establishment of the communication results from a special initial packet, which is transmitted by a communication slave (5) to a communication master (1)
- the initial packet is acknowledged by the master (1) with a confirmation packet
- this confirmation packet comprises information, whether subsequent communication is required.

17. The protocol according to claim 16, whereby each communication packet being sent to a communication slave (5) by the communication master (1), comprises information concerning the remaining energy of the communication slave (5).

18. The protocol according to claim 16 or 17, whereby each communication packet being sent to a communication slave (5) by the communication master (1), comprises information concerning the number of communication packets for the communication slave (5), which are present in the communication master (1).

19. A protocol for controlling data communication between a plurality of communication participants, whereby at least one participant acts as communication master (1) of the system, having a subsystem responsible for communication, which is operated continuously, and the other participants act as communication slaves (5) of the system, having subsystems responsible for communication, which are de-energized, when no data communication takes place, according to which:
- a communication participant acting as communication slave (5) activates its subsystem responsible for communication
- this communication slave (5) communicates towards the communication master (1) and keeps its subsystem responsible for communication active for the duration of the initial communication
- the communication master (1) confirms the receipt and responds by means of a response packet, containing information whether bidirectional connection is required for data communication, being possible at this point of time, whereby the communication master (1) transmits communication packets to the communication slave (5) and vice versa.

20. The protocol according to claim 19, whereby the bidirectional communication is terminated, when the master (1) no longer transmits communication packets to the slave (5).

21. The protocol according to claim 19 or 20, whereby the bidirectional communication is terminated, when the energy available from slave (5) which is required for maintaining data communication, is not sufficient.

22. The protocol according to any of claims 19 to 21, whereby the slave (5) deactivates its communication system, after communication is terminated.

23. A communication system
comprising a plurality of communication participants, each having a respective subsystem responsible for the communication,
whereby at least one communication participant is adapted to act as communication master (1) in the communication system, having a continuously operating subsystem,
whereby the other communication participants are adapted to act as communication slaves (5) in the communication system, having subsystems, which are de-energized, when no communication takes place,
whereby the communication participants are sensors (4).

24. The communication system according to claim 23, further comprising a control unit (2), which is adapted to communicate with the communication master (1) of the communication participants.

25. The communication system according to claim 23 or 24, which is adapted for bidirectional communication between the communication participants.

26. The communication system according to any of claims 23 to 25, whereby the communication participants are connected to each other via a bus system (3).

27. The communication system according to any of claims 23 to 26, whereby the communication participants are equipped for wireless data transmission.
